# FASCICULE DE BREVET EUROPEEN

(11) **EP 2 200 857 B1**
(45) Date de publication et mention de la délivrance du brevet: **20.02.2013**
(21) Numéro de dépôt: 08837925.0
(22) Date de dépôt: 15.09.2008
(51) Int. Cl.: B60K 37/06, G06F 3/01, G06F 3/048, B60K 35/00

(54) **PANNEAUX DE CONTROLE D'INSTRUMENTS DE BORD**
STEUERUNGSTAFEL FÜR BORDINSTRUMENTE
CONTROL PANELS FOR ONBOARD INSTRUMENTS

(30) Priorité: 14.09.2007 EP 07360040
(43) Date de publication de la demande: 30.06.2010
(73) Titulaire: Delphi Technologies, Inc., Troy, MI 48007 (US)
(72) Inventeur: TUPINIER, Laurent, F-67116 Reichstett (FR); MOLARD, Yannick, F-67130 Hersbach (FR)
(74) Mandataire: Robert, Vincent
(86) Numéro de dépôt international: PCT/FR2008/051651
(87) Numéro de publication internationale: WO 2009/047437

(56) Documents cités:
- EP-A- 1 759 912
- WO-A-2006/074712
- DE-A1- 10 303 793
- DE-A1- 19 901 896
- US-A- 5 598 527
- US-A1- 2005 276 448
- US-B1- 7 084 859

## Description

La présente invention a trait à un panneau de contrôle d'instruments de bord de véhicules, notamment destiné à être utilisé dans le domaine de l'automobile.

Il permet la mise en oeuvre simplifiée et optimisée de plusieurs groupes de fonctionnalités distinctes.

Les avancées technologiques successives appliquées à l'automobile conduisent à multiplier les possibilités de contrôle d'un nombre croissant de paramètres pour le conducteur du véhicule, voire ses autres occupants. Or, la possibilité du contrôle ou de la commande d'une fonction ou d'un groupe de fonctions implique en général la visualisation de leur état instantané. Cet accroissement constant et important du nombre de possibilités de modulations reflète aussi une automatisation de plus en plus poussée des véhicules et une exigence de confort accrue. Il conduit dans le même temps à un problème de gestion et de traitement de l'espace notamment pour localiser et utiliser judicieusement les organes de commande, de sélection, de réglage, les écrans de visualisation, etc.

Les emplacements utilisables et déjà utilisés pour l'implantation desdits organes se trouvent au niveau du volant, dans les espaces situés entre les sièges du conducteur et du passager avant, au niveau des accoudoirs de portières, sous le volant, et bien sûr sur le tableau de bord.

Le nombre des possibilités de commande / sélection / visualisation continuant à augmenter, il ne s'agit cependant plus seulement de trouver des nouveaux espaces pour les localiser, mais également de tenter de les regrouper, voire d'augmenter leur densité dans les endroits déjà utilisés, sans préjudicier pour autant à leur ergonomie de fonctionnement.

Une solution couramment employée pour améliorer la compacité des zones de commande/contrôle réside dans l'utilisation d'écrans, l'image véhiculant une densité d'information inégalée. Toutefois, même dans cette hypothèse, il n'est plus guère possible de recourir au type de solutions qui a prévalu jusqu'ici, à savoir introduire dans les automobiles de plus en plus d'écrans de contrôle, chacun dévolu à un groupe de fonctions particulières (climatisation, navigation, système audio ou de téléphonie, etc). Outre que l'utilisateur devait alors, certes inconsciemment, sélectionner à l'intérieur de l'habitacle de son véhicule simultanément les fonctions à activer et la localisation des organes de commande correspondants, la multiplication des écrans ramène au problème initial.

Il a donc été proposé de recourir à des écrans munis d'organes de commande virtuels qui changent en fonction de ce qui est visualisé sur l'écran, en vue de contrôler des fonctions ou des groupes de fonctions distinctes qui apparaissent alors séquentiellement à la manière de menus et sous-menus. La sélection des différents menus s'effectue directement sur l'écran, et non pas par l'intermédiaire de moyens externes.

L'un des avantages de ce type de solution résulte de l'effet synergique naissant de la multiplicité possible des dispositifs de contrôle /visualisation et du regroupement au même endroit des fonctionnalités qu'ils représentent. Les boutons de sélection permettent de remodeler visuellement le panneau de contrôle pour chaque groupe de fonction, les différents panneaux de contrôle sélectionnés obéissant cependant à une logique d'implantation des boutons de commande qui procède dans la mesure du possible d'un modèle unifié. L'utilisation du panneau de contrôle en est facilitée car rendue plus intuitive.

Une telle solution est par exemple décrite dans le document DE 103 03 793, qui divulgue un panneau de contrôle selon le préambule de la revendication 1 base sur un écran à la périphérie duquel se situent des zones délimitant des boutons de commande virtuels. Les changements séquentiels d'écrans, le cas échéant accompagnés de la modification des organes de commande/contrôle virtuels, nécessitent cependant paradoxalement une attention plus soutenue de la part des utilisateurs, du fait de la concentration élevée de dispositifs de commandes appliqués à des fonctions ou groupes de fonctions très variés mais disponibles en un seul endroit.

La seule utilisation de touches virtuelles ne suffit pas à garantir un fonctionnement homogène, facile à intégrer et de nature à augmenter la sécurité globale de conduite. Il ne suffit en effet pas de regrouper un nombre maximal de fonctions au même endroit, il faut aussi les organiser de manière intuitive avec une forme d'automatisation du comportement permettant que la sécurité soit réellement assurée. C'est l'objectif de l'invention.

Celle-ci a pour vocation de faciliter l'utilisation desdits organes virtuels en organisant de l'extérieur de l'écran des moyens fournissant en permanence aux utilisateurs des informations sur la nature des opérations à effectuer pour la commandes desdits organes, quelle que soit l'image apparaissant sur l'écran, ainsi qu'une assistance concrète immédiatement intelligible pour la réalisation de ces opérations et un degré d'automatisation de nature à susciter des réflexes entamant le moins possible la concentration de l'automobiliste.

A ces effets, l'invention, comportant de manière connue :
- un écran tactile de visualisation d'informations ;
- un cadre délimitant la périphérie dudit écran et comportant des zones de guidage pour doigts ;
- des boutons de sélection et de commande virtuels visualisés sur l'écran au moins dans lesdites zones de guidage ;
se caractérise à titre principal en ce que le cadre comporte un ou plusieurs orifices (13, 14, 15) formant chacun une zone de guidage pour un bouton de commande (19, 20, 21) virtuel, chaque orifice (13, 14, 15) étant complètement entouré par un contour (13', 14', 15') provenant du cadre (2), le contour (13', 14', 15') de chaque orifice (13, 14, 15) délimitant une forme qui dessine pour au moins un doigt un trajet correspondant au mode d'actionnement du bouton de commande (19, 20, 21) virtuel y apparaissant de manière que la géométrie de la forme informe l'utilisateur du mouvement à effectuer en vue d'actionner le bouton de commande (19, 20, 21) virtuel qu'elle délimite et de manière que la bordure interne de la forme guide le ou les doigts dans son/leur déplacement sur l'écran (1) tactile.

Ainsi, les boutons sont non seulement parfaitement localisés, mais ils comportent au surplus des moyens assurant d'une part une fonction informative sur la nature du mouvement à entreprendre et d'autre part un guidage, qui permettent à l'utilisateur d'en effectuer une utilisation dans les meilleures conditions, c'est-à-dire sans nécessiter de concentration particulière. Concrètement, cela signifie que la forme de l'orifice reconstitue celle d'un bouton réel en général à commande graduée, le guidage permettant de réaliser le même mouvement sur le bouton virtuel que celui qui aurait été appliqué à son équivalent réel.

Suivant une configuration possible, ces orifices sont ronds et délimitent des molettes de commande rotatives virtuelles. Dans ce cas, de préférence, une zone périphérique annulaire de la molette entoure une zone centrale occupée par un bouton poussoir virtuel.

Ces molettes obéissent à des mêmes logiques de fonctionnement qui facilitent le travail de l'utilisateur en ce qu'il met en toujours en oeuvre cette logique standardisée, ce qui confère une sorte d'automatisation intellectuelle du fonctionnement. En poussant cette logique à son extrême, l'emplacement même des molettes peut refléter des logiques différentes.

Ainsi, la zone annulaire de l'une au moins des molettes virtuelles, peut scanner séquentiellement et en boucle une succession d'actions apparaissant sur l'écran, la zone central validant l'action sur laquelle la molette se situe au moment de son actionnement (par exemple le choix de stations de radio). Alternativement, la zone annulaire de l'une au moins des molettes virtuelles (19, 20, 21), peut faire varier un unique paramètre (par exemple le son), la zone centrale activant ou désactivant ledit paramètre.

Selon l'invention, des molettes présentant les deux logiques de fonctionnement différentes telles que celles décrites ci-dessus se trouvent, dans le cadre de l'écran, toujours aux mêmes emplacements. En d'autres termes, selon leur emplacement dans le cadre, les molettes virtuelles obéissent toujours à la même logique de fonctionnement.

Alternativement, lesdits orifices peuvent être allongés et rectilignes et délimitent des curseurs de commande virtuels.

Ainsi, dans tous les cas, le contour rigide provenant du cadre permet un accompagnement du déplacement des doigts, selon le type de mouvement qu'ils ont à effectuer en relation avec le bouton virtuel. Dans le cas de molettes, le réglage s'effectue par une rotation du doigt à l'intérieur de la zone de guidage, rotation qui est guidée par le contour périphérique circulaire. Il suffit en fait que l'utilisateur suive de l'intérieur avec son doigt ce cadre circulaire dans un sens ou dans l'autre pour procéder à un réglage de la fonction commandée par ce bouton de réglage / commande.

De préférence, au moins certains des boutons virtuels apparaissant sur l'écran coopèrent avec un dispositif haptique procurant une sensation tactile au doigt en réponse à l'activation du bouton. Cela peut s'appliquer aussi bien aux boutons de commande qu'aux boutons de sélection.

Selon une possibilité, chaque dispositif haptique procurant une réponse tactile est basé sur un électroaimant vibrant.

La réponse tactile, qui peut être modulée par la commande de l'électroaimant, augmente sensiblement le confort et la sécurité d'utilisation d'un tel écran car supprimant pratiquement la nécessité de le regarder. Ainsi, si le doigt de l'utilisateur actionnant un bouton poussoir virtuel est soumis à une sensation tactile imitant le franchissement d'un point dur, il saura que sa commande a été prise en compte. De même, une réponse vibratile périodique à fréquence élevée imitant le passage de multiples crans d'une molette lui indiquera que sa commande visant à faire tourner ladite molette est bien prise en compte et que le mouvement rotatif "virtuel" est en train d'être effectué.

De préférence, les côtés latéraux du cadre qui délimite la périphérie de l'écran sont dotés d'orifices entourant au moins partiellement des représentations à l'écran de boutons virtuels de sélection.

De préférence encore, ces orifices comportent des onglets de localisation et de guidage pour les doigts.

La fonction de ces onglets n'est pas aussi complète que celle des orifices totalement enclos du cadre, mais elle s'en rapproche : faciliter l'accès à certains boutons virtuels de l'écran, typiquement ceux qui ne nécessitent pas de guidage résultant d'un déplacement modélisant une graduation de la commande. Il s'agit par exemple de boutons virtuels type poussoirs, ne permettant qu'une commande en tout ou rien.

Selon une possibilité, le panneau de contrôle de l'invention comporte un détecteur de position à infrarouge permettant de détecter si l'activation des boutons virtuels provient de sa gauche ou de sa droite.

Cette commande vise à améliorer la convivialité du véhicule, en traduisant la provenance de la commande par des effets différenciés en réponse. Ainsi, si le conducteur ou l'utilisateur approche son doigt en vue d'effectuer une commande appartenant aux fonctionnalités liées à la climatisation, par exemple une variation du flux d'air dans le véhicule ou de la température, ladite variation sera mise en oeuvre de manière préférentielle du côté d'où provient la demande de modification.

Plus généralement, le volume de l'invention peut comporter un détecteur de position à infrarouge permettant de localiser précisément la zone d'activation selon des coordonnées en X, Y dans un plan, en vue de présélectionner une fonction particulière à confirmer. Une telle fonction permet d'améliorer encore le confort d'utilisation de l'invention, et donc d'optimiser son ergonomie.

Par ailleurs, le cadre du panneau de contrôle de l'invention peut comporter des boutons mécaniques pour des fonctions d'urgence ou prioritaires.

Il s'agit en quelque sorte d'un accès mécanique privilégié aux fonctions les plus critiques, c'est-à-dire celles pour lesquelles on estime qu'il n'est pas judicieux, voire déconseillé, d'être contraint à passer par les différents menus pour les retrouver. Ainsi en va-t-il par exemple pour :
- les feux de détresse ;
- le volume sonore ;
- l'activation bluetooth ;
- la commande à distance de fonctions liées à l'habitation (ouverture du garage/portail..) ;
- le désembuage ;
- le réglage de température ;
- le recyclage interne de l'air en cas de pollution extérieure.

Dans tous les cas, la mise en oeuvre de ces différentes fonctions peut imposer une certaine rapidité de réaction qui ne s'accommode guère d'une recherche du menu adéquat sur l'écran, puis de la commande de la fonction.

L'unique panneau de contrôle à vocation multiple de l'invention permet de mettre en oeuvre de nombreux groupements de fonctionnalités, par exemple disponibles en option, ou dépendant de la gamme du véhicule. A titre d'exemple, les boutons de sélection peuvent s'appliquer à la / aux :
- téléphonie ;
- réglages de composants du véhicule ;
- navigation ;
- fonctions audio ;
- climatisation.

Chacun de ces boutons de sélection fait apparaître un écran particulier, comportant des informations spécifiques relatives à ces fonctions, et donnant accès à un menu se présentant sous forme de boutons de commande virtuels qui règlent les paramètres des fonctions choisies par les boutons de sélection virtuels.

En d'autres termes, le panneau de contrôle de l'invention permet la visualisation séquentielle de "menus graphiques" dédiés à chaque fonction.

L'invention va à présent être décrite plus en détails, en référence aux figures annexées, pour lesquelles :
- la figure 1 représente une vue en élévation de face d'un panneau de contrôle d'instruments de bord selon l'invention ;
- la figure 2 représente la fraction supérieure du cadre entourant
   l'écran ; et
- la figure 3 représente l'écran munie du cadre de la figure précédente, et les visualisations d'écran correspondant à différentes fonctions accessibles par les boutons de sélection.

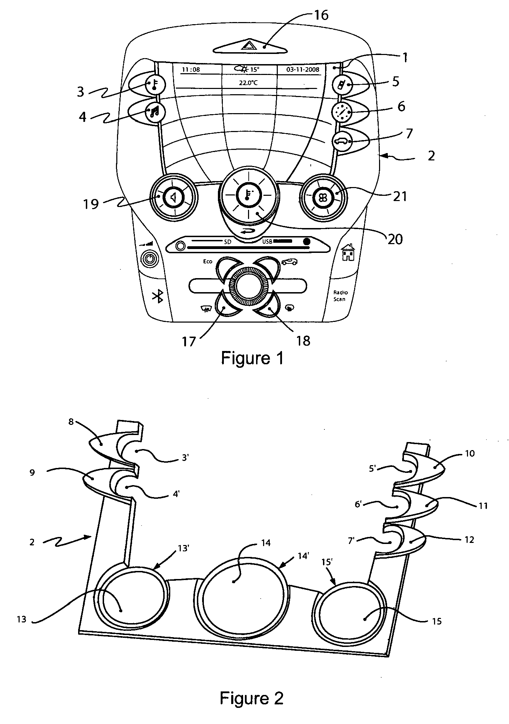

En référence à la figure 1, le panneau de contrôle des instruments de bord d'un véhicule selon l'invention se compose à titre principal d'un écran central (1) délimité par un cadre (2), et qui affiche des informations correspondant à des groupes de fonctions sélectionnés à l'aide de boutons virtuels, c'est-à-dire apparaissant sur l'écran (1). Ces boutons, en l'occurrence au nombre de cinq (3, 4, 5, 6, 7) sont délimités par des orifices d'allure semi-circulaire (3') à (7') (voir en figure 2) situés sur les côtés latéraux du cadre (2). Des onglets (8, 9, 10, 11, 12) permettent de guider le doigt de l'utilisateur vers les boutons virtuels (3, 4, 5, 6, 7) de manière à faciliter le confort d'utilisation du panneau, et à permettre à l'utilisateur de n'accorder qu'une attention requérant une concentration minimale à l'opération qu'il est en train d'effectuer, à des fins de sécurité.

La partie inférieure du cadre est occupée par d'autres orifices, également d'allure circulaire (13, 14, 15), mais dont la totalité de la périphérie est entourée par le cadre (2). Ainsi, des arceaux (13', 14', 15') solidaires du cadre (2) permettent d'enclore la totalité des orifices précités (13, 14, 15) à l'intérieur d'un contour rigide, à des fins qui seront expliquées plus en détail dans la suite.

La partie supérieure du cadre (2) comporte un bouton mécanique traditionnel (16) actionnant les feux de détresse et, en partie inférieure, des boutons mécaniques d'accès immédiat à des fonctions prioritaires, par exemple pour le désembuage du pare-brise (17) et de la vitre arrière (18). Les orifices (13, 14, 15) sont occupés par des boutons virtuels de commande (19, 20, 21) qui permettent d'effectuer un réglage de paramètres, en l'occurrence à l'aide de molettes virtuelles. Ces molettes, ainsi le cas échéant que les boutons (3) à (7), sont munis d'un dispositif haptique qui permet un retour tactile d'informations lorsqu'ils sont actionnés. Le contour circulaire s'impose à l'évidence pour guider le doigt d'un utilisateur actionnant une molette, même virtuelle.

Ce contour complet donne une information immédiate à l'utilisateur : la commande du bouton virtuel qu'il enclot doit être rotative, ledit contour rigide fournissant ensuite un appui permanent guidant le doigt pendant l'actionnement du bouton.

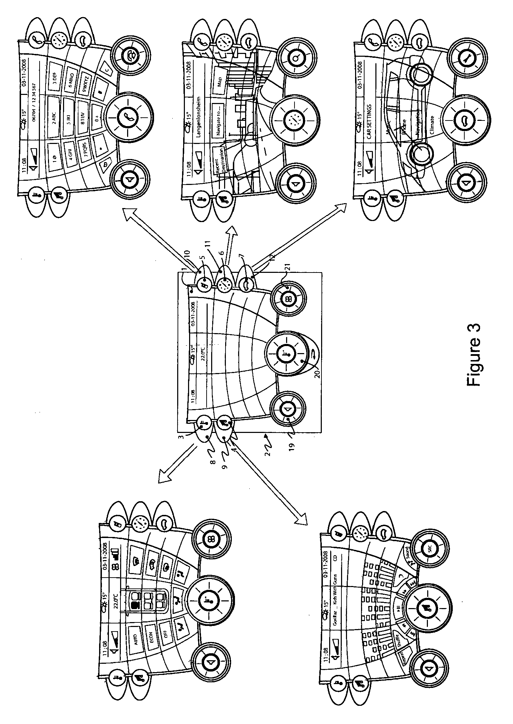

La figure 3 montre que quelle que soit la sélection effectuée à l'aide des boutons (3) à (7), la logique de représentation obéit sensiblement au même schéma : des molettes apparaissent dans tous les cas en bas de l'écran, dans les orifices (13) à (15). Ces molettes permettent le contrôle /réglage de fonctions différentes selon l'écran qui apparaît en réponse à l'activation d'un bouton de sélection (3, 4, 5, 6, 7). Le bouton (3) correspond aux fonctionnalités liées à la climatisation. Une pression sur ce bouton virtuel (3) fait apparaître l'écran représenté en haut à gauche de la figure 3. Dans cette hypothèse, une représentation graphique du véhicule en vue de dessus apparaît au centre de l'écran, entourée de boutons virtuels de réglages classiques, du type direction de la ventilation, désembuage, recyclage de l'air, etc. Les molettes servent en l'espèce à faire varier la température, la puissance du flux d'air, etc.

L'écran montré en bas à gauche regroupe les fonctions sonores, c'est-à-dire de gestion d'un lecteur de CD, d'un tuner radio, etc. Les molettes servent alors par exemple à la recherche de stations, à la variation du niveau sonore, etc.

L'écran apparaissant en haut à droite regroupe les fonctionnalités liées à la téléphonie et l'écran (1) fait par conséquent apparaître un clavier de téléphone muni de touches virtuelles. Les molettes servent par exemple à faire défiler des numéros de téléphone en registrés, à faire varier le niveau sonore, etc.

L'écran figuré au milieu à droite regroupe les fonctionnalités de navigation, avec des molettes permettant une variation des dimensions de l'image, du niveau sonore, etc.

Enfin, l'écran qui est représenté en bas à droite comporte les fonctions liées à certains composants du véhicule : réglage de l'orientation des phares avant, réglage de la position du volant, etc.

Il est à noter que les représentations graphiques qui apparaissent sur les différents écrans et sur les boutons virtuels permettent une gestion intuitive et conviviale du panneau de l'invention. Le cas échéant, des rendus de couleurs différents permettent d'organiser, sur l'écran (1), un retour d'informations visuel pour l'utilisateur. Des animations peuvent également être utilisées, toujours à des fins informatives. Lorsque le véhicule est démarré, une animation d'introduction, apparaissant par défaut, est lancée. En mode veille, une image vient en fond d'écran se déplaçant sur l'écran pour afficher une certaine dynamique de l'ensemble.

Il peut s'agir d'un écran de gestion et de sélection des différentes longueurs d'ondes des radios FM. Bien entendu, une partie de l'écran est toujours occupée par des informations d'ordre général, qui sont conservées malgré les changements d'écran : date, heure, température extérieure, etc.

En dehors des commandes virtuelles positionnées en périphérie de l'écran dans le cadre physique ainsi défini, on peut accéder directement dans la zone principale de l'écran aux commandes du menu affiché. En prenant l'exemple des stations de radio qui s'affichent au centre de l'écran, par pression sur celles-ci, on active la station choisie et on reçoit un retour d'effort tactile de la zone d'écran ainsi activée.

Comme cela a été indiqué auparavant dans le cadre de l'invention, la molette (19) de gauche fonctionne toujours selon la même logique : la zone annulaire permet de faire varier le paramètre, la zone centrale permettant de l'activer ou de le désactiver. Pour améliorer encore la commodité d'utilisation en faisant appel autant que possible à des automatismes intellectuels, ce bouton virtuel remplit au surplus toujours la même fonctions, quelle que soit la « coloration » fonctionnelle de l'écran par ailleurs : la zone annulaire permet de faire varier la puissance du son, alors que le bouton central coupe ou réactive ledit son.

La molette centrale (20) obéit quant à elle toujours à une logique de fonctionnement selon laquelle la zone annulaire scanne des actions possibles, comme le choix d'une fréquence radio ou une température intérieure, le bouton central permettant de valider le choix. La molette (20) ne fonctionne jamais avec la logique propre à la molette (19), et vice-versa, ce qui facilite grandement la tâche de l'automobiliste.

Selon l'invention, la gestion des différents boutons est donc optimisée de sorte que la nature des commandes (molettes) est suggérée par la forme de l'écran, et les opérations précises dépendent de la position du bouton virtuel dans l'écran (2), ce qui rend le fonctionnement à la fois intuitif et automatique, avec un apprentissage très aisé.

L'invention ne se limite évidemment pas aux exemples précités, mais englobe d'autres fonctions, paramètres variables de réglage, etc. mis en oeuvre dans des véhicules automobiles ou autres.

## Revendications

1. Panneau de contrôle d'instruments de bord de véhicules, comprenant :
- un écran (1) tactile de visualisation d'informations ;
- un cadre (2) délimitant la périphérie dudit écran (1) et comportant des zones de guidage (3', 4', 5', 6', 7', 13, 14, 15) pour doigts ;
- des boutons de sélection (3, 4, 5, 6, 7) et de commande (19, 20, 21) virtuels visualisés sur l'écran (1) au moins dans lesdites zones de guidage (3', 4', 5', 6', 7', 13, 14, 15) ;
**caractérisé en ce que** le cadre (2) comporte un ou plusieurs orifices (13, 14, 15) formant chacun une zone de guidage pour un bouton de commande (19, 20, 21) virtuel, chaque orifice (13, 14, 15) étant complètement entouré par un contour (13', 14', 15') provenant du cadre (2), le contour (13', 14', 15') de chaque orifice (13, 14, 15) délimitant une forme qui dessine pour au moins un doigt un trajet correspondant au mode d'actionnement du bouton de commande (19, 20, 21) virtuel y apparaissant de manière que la géométrie de la forme informe l'utilisateur du mouvement à effectuer en vue d'actionner le bouton de commande (19, 20, 21) virtuel qu'elle délimite et de manière que la bordure interne de la forme guide le ou les doigts dans son/leur déplacement sur l'écran (1) tactile.

2. Panneau de contrôle selon la revendication précédente, **caractérisé en ce que** lesdits orifices (13, 14, 15) sont ronds et délimitent des molettes de commande rotatives virtuelles (19, 20, 21).

3. Panneau de contrôle selon la revendication précédente, **caractérisé en ce qu'**une zone périphérique annulaire de la molette entoure une zone centrale occupée par un bouton poussoir virtuel.

4. Panneau de contrôle selon la revendication précédente, **caractérisé en ce que** la zone annulaire de l'une au moins des molettes virtuelles (19, 20, 21), scanne séquentiellement et en boucle une succession d'actions apparaissant sur l'écran, la zone centrale validant l'action sur laquelle la molette se situe au moment de son actionnement.

5. Panneau de contrôle selon la revendication 4, **caractérisé en ce que** la zone annulaire de l'une au moins des molettes virtuelles (19, 20, 21), fait varier un unique paramètre, la zone central activant ou désactivant ledit paramètre.

6. Panneau de contrôle selon l'une des revendications 4 et 5, **caractérisé en ce que** selon leur emplacement dans le cadre (2), les molettes virtuelles (19, 20, 21) obéissent toujours à la même logique de fonctionnement.

7. Panneau de contrôle selon la revendication 1, **caractérisé en ce que** lesdits orifices sont allongés et rectilignes et délimitent des curseurs de commande virtuels.

8. Panneau de contrôle selon l'une quelconque des revendications précédentes, **caractérisé en ce qu'**au moins certains des boutons virtuels (3, 4, 5, 6, 7, 19, 20, 21) apparaissant sur l'écran coopèrent avec un dispositif haptique procurant une sensation tactile au doigt en réponse à l'activation du bouton (3, 4, 5, 6, 7, 19, 20, 21).

9. Panneau de contrôle selon la revendication précédente, **caractérisé en ce que** chaque dispositif haptique procurant une réponse tactile est basé sur un électroaimant vibrant.

10. Panneau de contrôle selon l'une des revendications précédentes, **caractérisé en ce que** les côtés latéraux du cadre (2) sont dotés d'orifices (3', 4', 5', 6', 7') entourant au moins partiellement des représentations à l'écran (1) de boutons virtuels de sélection (3, 4, 5, 6, 7).

11. Panneau de contrôle selon la revendication précédente, **caractérisé en ce que** lesdits orifices (3', 4', 5', 6', 7') comportent des onglets (8, 9, 10, 11, 12) de localisation et de guidage pour les doigts.

12. Panneau de contrôle selon l'une quelconque des revendications précédentes, **caractérisé en ce qu'**il comporte un détecteur de position à infrarouge permettant de détecter si l'activation des boutons virtuels provient de gauche ou de droite.

13. Panneau de contrôle selon l'une des revendications précédentes, **caractérisé en ce qu'**il comporte un détecteur de position à infrarouge permettant de localiser précisément la zone d'activation selon des coordonnées en X,Y dans un plan, en vue de présélectionner une fonction particulière à confirmer.

14. Panneau de contrôle selon l'une quelconque des revendications précédentes, **caractérisé en ce que** le cadre (2) comporte des boutons mécaniques (16, 17, 18) pour des fonctions d'urgence ou prioritaires.

15. Panneau de contrôle selon la revendications précédente, **caractérisé en ce que** lesdites fonctions comportent :
- les feux de détresse ;
- le volume sonore ;
- l'activation bluetooth ;
- le désembuage ;
- le réglage de température ;
- le recyclage interne de l'air en cas de pollution extérieure ;
- la commande à distance de fonctions liées à l'habitation (ouverture du garage, du portail, ...).

16. Panneau de contrôle selon l'une quelconque des revendications précédentes, **caractérisé en ce que** les boutons de sélection virtuels (3, 4, 5, 6, 7) s'appliquent à la / aux :
- téléphonie ;
- réglages de composants du véhicule ;
- navigation ;
- fonctions audio ;
- climatisation.

17. Panneau de contrôle selon l'une quelconque des revendications précédentes, **caractérisé en ce que** les boutons de commande virtuels (19, 20, 21) règlent les paramètres des fonctions choisies par les boutons de sélection virtuels (3, 4, 5, 6, 7).

## Claims

1. Control panel for on-board vehicle instruments, comprising:
- a touch-screen (1) for display of information;
- a frame (2) defining the periphery of the said screen (1) and including guiding zones (3', 4', 5', 6', 7', 13, 14, 15) for fingers;
- virtual selection (3, 4, 5, 6, 7) and control (19, 20, 21) buttons displayed on the screen (1) at least in the said guiding zones (3', 4', 5', 6', 7', 13, 14, 15);
**characterised by** the fact that the frame (2) includes one or more orifices (13, 14, 15) each forming a guiding zone for a virtual control button (19, 20, 21), each orifice (13, 14, 15) being completely surrounded by an outline (13', 14', 15') coming from the frame (2), the outline (13', 14', 15') of each orifice (13, 14, 15) defining a shape which forms for at least one finger a path corresponding to the mode of actuation of the virtual control button (19, 20, 21) appearing there so that the geometry of the shape informs the user of the movement to be performed in order to actuate the virtual control button (19, 20, 21) which it defines and so that the inside edge of the shape guides the finger or fingers in its/their displacement on the touch-screen (1).

2. Control panel as described in the preceding claim, **characterised by** the fact that the said orifices (13, 14, 15) are round and define virtual rotary control knobs (19, 20, 21).

3. Control panel as described in the preceding claim, **characterised by** the fact that an annular peripheral zone of the knob surrounds a central zone occupied by a virtual pushbutton.

4. Control panel as described in the preceding claim, **characterised by** the fact that the annular zone of at least one of the virtual knobs (19, 20, 21), scans sequentially and in a loop a succession of actions appearing on the screen, the central zone validating the action on which the knob is situated at the moment of its actuation.

5. Control panel as described in claim 4, **characterised by** the fact that the annular zone of at least one of the virtual knobs (19, 20, 21), causes variation of a single parameter, the central zone activating or deactivating the said parameter.

6. Control panel as described in one of claims 4 and 5, **characterised by** the fact that depending on their location in the frame (2), the virtual knobs (19, 20, 21) always obey the same operational logic.

7. Control panel as described in claim 1, **characterised by** the fact that the said orifices are elongate and rectilinear and define virtual control sliders.

8. Control panel as described in any one of the preceding claims, **characterised by** the fact that at least certain of the virtual buttons (3, 4, 5, 6, 7, 19, 20, 21) appearing on the screen cooperate with a haptic device providing a tactile sensation to the finger in response to the activation of the button (3, 4, 5, 6, 7, 19, 20, 21 ).

9. Control panel as described in the preceding claim, **characterised by** the fact that each haptic device providing a tactile response is based on a vibrating electromagnet.

10. Control panel as described in one of the preceding claims, **characterised by** the fact that the lateral sides of the frame (2) are provided with orifices (3', 4', 5', 6', 7') at least partially surrounding representations on the screen (1) of virtual selection buttons (3, 4, 5, 6, 7).

11. Control panel as described in the preceding claim, **characterised by** the fact that the said orifices (3', 4', 5', 6', 7') include thumb-grooves (8, 9, 10, 11, 12) for location and guiding for the fingers.

12. Control panel as described in any one of the preceding claims, **characterised by** the fact that it includes an infrared position detector permitting detection of whether the activation of the virtual buttons comes from the left or the right.

13. Control panel as described in one of the preceding claims, **characterised by** the fact that it includes an infrared position detector permitting precise location of the activation zone by the coordinates X, Y in a plane, in order to preselect a particular function to be confirmed.

14. Control panel as described in any one of the preceding claims, **characterised by** the fact that the frame (2) includes mechanical buttons (16, 17, 18) for emergency or priority functions.

15. Control panel as described in the preceding claim, **characterised by** the fact that the said functions include:
- hazard warning lights;
- sound volume;
- bluetooth activation;
- demisting;
- temperature adjustment;
- interior recycling of air in case of exterior pollution;
- remote control of functions linked to dwellings (opening of the garage, of the gate,...).

16. Control panel as described in any one of the preceding claims, **characterised by** the fact that the virtual selection buttons (3, 4, 5, 6, 7) are applied to:
- telephony;
- adjustments of components of the vehicle;
- navigation;
- audio functions;
- air-conditioning.

17. Control panel as described in any one of the preceding claims, **characterised by** the fact that the virtual control buttons (19, 20, 21) adjust the parameters of the functions selected by the virtual selection buttons (3, 4, 5, 6, 7).

## Patentansprüche

1. Steuerungstafel zum Steuern von Bordinstrumenten für Fahrzeuge, enthaltend:
- einen Berührungsbildschirm zum Anzeigen von Informationen;
- einen Rahmen (2), der den Umfang des Bildschirms (1) eingrenzt und Führungsbereiche (3', 4', 5', 6', 7', 13, 14, 15) zum Führen der Finger aufweist;
- virtuelle Auswahl- (3, 4, 5, 6, 7) und Betätigungsknöpfe (19, 20, 21), die zumindest in den Führungsbereichen (3',4',5',6',7',13, 14, 15) am Bildschirm (1) angezeigt werden;
**dadurch gekennzeichnet, dass** der Rahmen (2) eine oder mehrere Öffnungen (13, 14, 15) aufweist, die jeweils einen Führungsbereich für einen virtuellen Betätigungsknopf (19, 20, 21) bilden, wobei jede Öffnung (13, 14, 15) vollständig von einer Kontur (13', 14', 15') umgeben wird, die von dem Rahmen (2) gebildet wird, wobei die Kontur (13', 14', 15') einer jeden Öffnung (13, 14, 15) eine Form eingrenzt, die für zumindest einen Finger eine Wegstrecke vorzeichnet, die dem Betätigungsmodus des virtuellen Betätigungsknopfs (19, 20, 21) entspricht, der darin erscheint, so dass die Geometrie der Form den Benutzer über die Bewegung informiert, welche zum Betätigen des virtuellen Betätigungsknopfs (19, 20, 21), den sie eingrenzt, auszuführen ist, und so dass die innere Kante der Form den bzw. die Finger bei seiner/ihrer Verlagerung am Berührungsbildschirm (1) führt.

2. Steuerungstafel nach dem vorangehenden Anspruch, **dadurch gekennzeichnet, dass** die Öffnungen (13, 14, 15) rund ausgeführt sind und virtuelle, drehbare Steuerrädchen (19, 20, 21) eingrenzen.

3. Steuerungstafel nach dem vorangehenden Anspruch, **dadurch gekennzeichnet, dass** ein ringförmiger Umfangsbereich des Rädchens einen Mittelbereich umgibt, der von einem virtuellen Druckknopf eingenommen wird.

4. Steuerungstafel nach dem vorangehenden Anspruch, **dadurch gekennzeichnet, dass** der ringförmige Bereich zumindest des einen virtuellen Rädchens (19, 20, 21) eine Abfolge von am Bildschirm erscheinenden Aktionen sequentiell abtastet und zu einer Schleife verknüpft, wobei der Mittelbereich die Aktion validiert, an welcher sich das Rädchen zum Zeitpunkt seiner Betätigung befindet.

5. Steuerungstafel nach Anspruch 4, **dadurch gekennzeichnet, dass** der ringförmige Bereich zumindest eines der virtuellen Rädchen (19, 20, 21) einen einzelnen Parameter verändert, wobei der Mittelbereich den Parameter aktiviert bzw. deaktiviert.

6. Steuerungstafel nach einem der Ansprüche 4 und 5, **dadurch gekennzeichnet, dass** je nach Stelle, welche die virtuellen Rädchen (19, 20, 21) im Rahmen einnehmen, diese stets die gleiche Funktionslogik befolgen.

7. Steuerungstafel nach Anspruch 1, **dadurch gekennzeichnet, dass** die Öffnungen langgestreckt und geradlinig verlaufen und virtuelle Steuerungscurser begrenzen.

8. Steuerungstafel nach einem der vorangehenden Ansprüche, **dadurch gekennzeichnet, dass** zumindest bestimmte der virtuellen Knöpfe (3, 4, 5, 6, 7, 19, 20, 21), die auf dem Bildschirm erscheinen, mit einer haptischen Vorrichtung zusammenwirken, die dem Finger eine Berührungsempfindung in Reaktion auf die Aktivierung des Knopfes (3, 4, 5, 6, 7, 19, 20, 21) vermittelt.

9. Steuerungstafel nach dem vorangehenden Anspruch, **dadurch gekennzeichnet, dass** jede haptische Vorrichtung, die eine Berührungsreaktion bewirkt, auf einem vibrierenden Elektromagneten basiert.

10. Steuerungstafel nach einem der vorangehenden Ansprüche, **dadurch gekennzeichnet, dass** die Seitenschenkel des Rahmens (2) mit Öffnungen (3',4',5',6',7') versehen sind, die zumindest teilweise Darstellungen von virtuellen Auswahlknöpfen (3, 4, 5, 6, 7) auf dem Bildschirm (1) umgeben.

11. Steuerungstafel nach dem vorangehenden Anspruch, **dadurch gekennzeichnet, dass** die Öffnungen (3', 4', 5', 6', 7') Keile (8, 9, 10, 11, 12) zur Lokalisierung und Führung für die Finger aufweisen.

12. Steuerungstafel nach einem der vorangehenden Ansprüche, **dadurch gekennzeichnet, dass** sie einen Infrarot-Stellungssensor aufweist, mit dem erfasst werden kann, ob die Aktivierung der virtuellen Knöpfe von links oder von recht stammt.

13. Steuerungstafel nach einem der vorangehenden Ansprüche, **dadurch gekennzeichnet, dass** sie einen Infrarot-Stellungssensor aufweist, mit dem der Aktivierungsbereich gemäß der X-, Y-Koordinaten in einer Ebene genau lokalisiert werden kann, um eine bestimmte Funktion vorzuwählen, die zu bestätigen ist.

14. Steuerungstafel nach einem der vorangehenden Ansprüche, **dadurch gekennzeichnet, dass** der Rahmen (2) mechanische Knöpfe (16, 17, 18) für Notfunktionen bzw. vorrangige Funktionen aufweist.

15. Steuerungstafel nach dem vorangehenden Anspruch, **dadurch gekennzeichnet, dass** die Funktionen umfassen:
- Warnblinklicht;
- Lautstärke;
- Bluetooth-Aktivierung;
- Beschlagverminderung;
- Temperatureinstellung;
- interne Luftumwälzung im Falle von äußerer Verunreinigung;
- Fernsteuerung von Funktionen, die mit der Wohnstätte zusammenhängen (Öffnen der Garage, des Tors, ...).

16. Steuerungstafel nach einem der vorangehenden Ansprüche, **dadurch gekennzeichnet, dass** die virtuellen Auswahlknöpfe (3, 4, 5, 6, 7) Anwendung finden bei:
- Telefonie;
- Einstellungen von Komponenten des Fahrzeugs;
- Navigation;
- Audio-Funktionen;
- Klimatisierung.

17. Steuerungstafel nach einem der vorangehenden Ansprüche, **dadurch gekennzeichnet, dass** die virtuellen Betätigungsknöpfe (19, 20, 21) die Parameter der über die virtuellen Auswahlknöpfe (3, 4, 5, 6, 7) ausgewählten Funktionen einstellen.
